# EUROPEAN PATENT SPECIFICATION

(11) **EP 4 086 169 B1**
(45) Date of publication and mention of the grant of the patent: **15.10.2025**
(21) Application number: 21172577.5
(22) Date of filing: 06.05.2021
(51) Int. Cl.: B64C 25/42, B64C 25/44, B60T 13/14, B60T 8/17, B60T 13/16, B60T 13/68

(54) **AIRCRAFT BRAKING SYSTEM**
FLUGZEUGBREMSSYSTEM
SYSTÈME DE FREINAGE D'AÉRONEF

(43) Date of publication of application: 09.11.2022
(73) Proprietor: Safran Landing Systems Canada Inc., Ajax, Ontario L1S 2G8 (CA); Safran Landing Systems UK Ltd, Gloucester, Gloucestershire GL2 9QH (GB)
(72) Inventor: LOVE, Tom, Ross-On-Wye, HR9 7NX (GB); EVANS, Roy, Haresfield, GL10 3EN (GB); SCHMIDT, Kyle, Whitby, L1M 2E3 (CA)
(74) Representative: Latham, Stuart Alexander

(56) References cited:
- EP-A1- 0 399 844
- EP-A2- 0 831 027
- DE-A1- 102012 213 268
- KR-A- 20170 055 880
- US-A1- 2002 057 012
- US-A1- 2004 239 173

## Description

### BACKGROUND OF THE INVENTION

This invention relates aircraft braking systems. Aircraft braking systems typically include one or more braking actuators driven, during normal operation, by a central hydraulic system. There is also a requirement for an emergency hydraulic fluid supply system to drive the braking actuator in emergency situations, such as when the primary hydraulic circuit fails. The same arrangement is typically also used to maintain sufficient pressure on the brakes whilst the aircraft is parked. Currently, emergency braking is achieved using an accumulator downstream of a check-valve fed from the central hydraulic system. Should the hydraulic system fail, the accumulator holds enough fluid to allow multiple applications of the braking actuator.

Each braking application can use a full piston's volume of fluid before returning it to the reservoir of the central hydraulic system. Therefore, the requirement for multiple applications can result in a large accumulator. Furthermore, it limits the number of applications that can be used in an emergency situation.

The same accumulator arrangement is also used to maintain sufficient pressure on the brakes whilst the aircraft is parked. If mechanical clearances grow, such as when brakes cool, the pressure supplied by the accumulator is sufficient to maintain the braking function.

US Patent application US 2004/0239173 A1 relates to a redundant architecture for a brake-by-wire system that includes a hydraulic power source and an emergency brake power source. In US 2002/057012 A1, accumulators are connected on each circuit in sufficient number for each accumulator to feed two pairs of brakes and an electrically-driven pump is arranged to maintain a predetermined pressure level in all of the accumulators of the circuit in question.

German patent application DE 10 2012 213 268 A1 relates to an actuating unit for a brake system and a method for braking.

### SUMMARY OF THE INVENTION

According to a first aspect of the invention there is provided an aircraft braking system in accordance with claim 1.

This provides a braking system of reduced mass, size and/or complexity in comparison to known arrangements.

The piezoelectric pump can comprise a pumping chamber and a piezoelectric stack configured to change the volume of the pumping chamber. The piezoelectric pump can also comprise an electronic drive unit configured to control the piezoelectric stack, and a non-return valve on each side of the pumping chamber configured to control inlet and outlet flow to the pumping chamber, respectively.

Preferably, the braking system further comprises an accumulator arranged to store pressurised hydraulic fluid returned from the braking actuator, wherein the piezoelectric pump is arranged to draw hydraulic fluid from the accumulator. With this arrangement, there is no limit to the number of strokes that the braking actuator can perform when being supplied by the secondary hydraulic circuit (e.g. in emergency situations). Additionally, the inlet of the piezoelectric pump can be supplied with pressurised hydraulic fluid. Furthermore, the accumulator can be configured to store an amount of hydraulic fluid for a single full stroke of the braking actuator. In other words, the fluid capacity of the accumulator may be equal to the capacity of the active chamber of the braking actuator. With this arrangement, the accumulator can be reduced in size and mass, thereby reducing the size and mass of the braking assembly.

Optionally, the piezoelectric pump is configured to draw exclusively from hydraulic fluid entrapped or contained within one or more hydraulic lines downstream of the braking actuator. In other words, with this arrangement there is no need for an emergency accumulator. This can provide a system of further reduced mass and size.

The primary and secondary hydraulic fluid supply circuits are in fluid communication with the braking actuator via a brake control valve arranged to control the movement of hydraulic fluid into and out of the braking actuator. With this arrangement, the number of separate brake control valves can be reduced, thereby reducing the size, mass and/or complexity of the system.

The brake control valve is connected to a supply line of the primary hydraulic circuit and to an outlet of the piezoelectric pump via a first shared hydraulic line; the brake control valve is connected to a return line of the primary hydraulic circuit and to an inlet of the piezoelectric pump via a second shared hydraulic line; and the brake control valve is arranged to selectively connect the braking actuator to the first shared hydraulic line or to the second shared hydraulic line.

Optionally, the supply line of the primary hydraulic fluid supply circuit is connected to the first shared hydraulic line via a first non-return valve arranged to control an incoming flow of hydraulic fluid from primary hydraulic circuit.

Additionally or alternatively, the return line of the primary hydraulic fluid supply circuit may be connected to the second shared hydraulic line via a second non-return valve arranged to control an outgoing flow of hydraulic fluid returned to the primary hydraulic circuit.

The supply line is a hydraulic line (e.g. a pipe or hose) arranged to transport an incoming flow of hydraulic fluid to the braking actuator. The return line is a similar hydraulic line arranged to transport an outgoing flow of hydraulic fluid from the braking actuator (e.g. back to a central hydraulic system). The non-return valves, also known as one way or check valves, are arranged to selectively permit the flow of hydraulic fluid in one direction (i.e. towards the actuator for the first non-return valve, and away from the actuator for the second non-return valve). The non-return valves can be spring-loaded check valves.

The outlet and inlet of the piezoelectric pump can be in fluid connection with the shared supply and return lines, respectively, via hydraulic lines. The first and second non-return valves can be caused to close by hydraulic pressure generated when the piezoelectric pump is supplying pressurised hydraulic fluid to the braking actuator. In other words, the flow of pressurised hydraulic fluid from the outlet of the pump to the braking actuator acts to close to first non-return valve, and the flow of pressurised hydraulic fluid from the braking actuator into the inlet of the piezoelectric pump acts to close the second non-return valve.

With this arrangement, the primary hydraulic circuit can be at least partially disconnected from (i.e. not in fluid communication with) the braking actuator when the secondary hydraulic circuit is operating (e.g. in an emergency braking situation). This can increase the hydraulic pressure of the secondary hydraulic circuit and enable the secondary hydraulic circuit to operate closer to closed-loop pressure.

Optionally, the accumulator is connected to the return line at a point upstream of the second non-return valve. In other words, the accumulator can be positioned at a point on the shared portion of the return line between the second non-return valve and the braking actuator, or brake control valve. With this arrangement, the accumulator can receive and store pressurised hydraulic fluid when the second hydraulic circuit is operating (i.e. when the pump is supplying pressurised hydraulic fluid to the braking actuator).

Optionally, the secondary hydraulic fluid supply circuit comprises: a third non-return valve arranged to control an incoming flow of hydraulic fluid into an inlet of the piezoelectric pump; and a fourth non-return valve arranged to control an outgoing flow of hydraulic fluid from the outlet of the pumping chamber. The non-return valves, also known as one way or rectifying valves, are arranged to selectively permit the flow of hydraulic fluid in one direction (i.e. towards the actuator for the fourth non-return valve, and away from the actuator for the third non-return valve). The non-return valves can be check valves. The third and fourth non-return valves can be caused to close by hydraulic pressure generated when the primary hydraulic fluid supply circuit is supplying pressurised hydraulic fluid to the braking actuator. In other words, the flow of pressurised hydraulic fluid from the supply line of the primary hydraulic circuit acts to close the fourth non-return valve, which in turn causes the third non-return valve to close.

With this arrangement, the secondary hydraulic circuit can be disconnected from (i.e. not in fluid communication with) the braking actuator when the primary hydraulic circuit is operating (e.g. in a 'normal' braking situation). The one-way valves of the primary hydraulic circuit can cooperate with the non-return valves and of the secondary hydraulic circuit, such that only one of the primary or secondary hydraulic circuits is connected to the braking actuator at any one time.

Optionally, the secondary hydraulic fluid supply circuit is an emergency hydraulic fluid supply circuit configured to supply pressurised hydraulic braking fluid to the braking actuator when the primary hydraulic fluid supply circuit is inoperative. The primary hydraulic fluid supply circuit may be considered inoperative if, for instance, hydraulic pressure from the supply line is insufficient to perform a full stroke of the braking actuator. This could occur when there is a fault or failure in the central hydraulic system.

Optionally, the braking actuator is configured to apply a parking brake, and the secondary hydraulic fluid supply circuit is configured to supply pressurised hydraulic fluid to the braking actuator to maintain a braking force. A parking brake applies the braking actuator(s) with sufficient pressure to keep the aircraft stationary. With this arrangement, the secondary hydraulic circuit can be operated separately from the primary hydraulic circuit to maintain sufficient parking brake pressure to accommodate for changing mechanical clearances (such as when the aircraft braking assembly cools).

Optionally, the primary hydraulic fluid supply circuit comprises, or is coupled to, a central hydraulic system. A central hydraulic system contains a reservoir of hydraulic fluid and is used to supply pressurised hydraulic fluid to a number of hydraulic sub-systems. The supply line of the primary hydraulic system may supply hydraulic fluid from the reservoir of the central hydraulic system, and the return line of the primary hydraulic circuit may return hydraulic fluid to the reservoir of the central hydraulic system.

Optionally, the primary and secondary hydraulic fluid supply circuits are configured to supply pressurised hydraulic fluid to two or more braking actuators.

According to a further aspect of the invention, there is provided an aircraft landing gear assembly comprising the aircraft braking system according to any of the above descriptions.

According to a further aspect of the invention, there is an aircraft comprising the aircraft landing gear assembly described above.

The electronic drive unit can drive the piezoelectric stack at a predetermined frequency, such that the piezoelectric stack alternately increases and decreases the volume of the pumping chamber.

### BRIEF DESCRIPTION OF THE DRAWINGS

Embodiments of the invention will now be described with reference to the accompanying drawings, in which:
Figure 1 is a diagram of a known aircraft braking system;
Figure 2 is a diagram of an aircraft braking system according to an embodiment of the invention;
Figure 3 is a diagram of an aircraft braking system according to an embodiment of the invention.

### DETAILED DESCRIPTION OF EMBODIMENTS

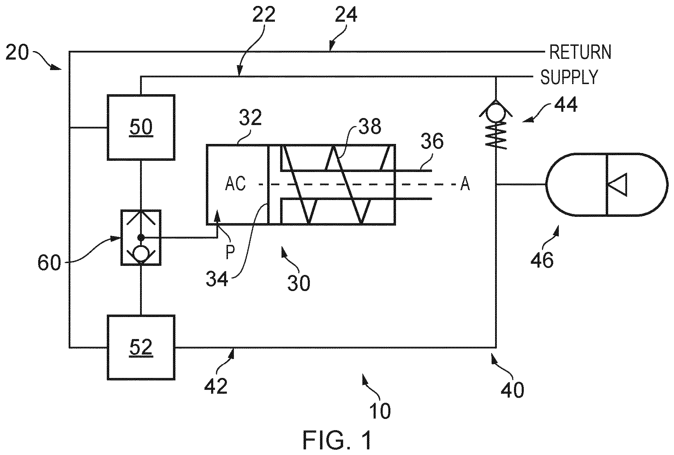

Fig. 1 is a diagram of a known braking system 10, comprising a primary hydraulic fluid supply circuit 20 that drives a braking actuator 30 under normal operation and an emergency hydraulic fluid supply circuit 40 that drives the braking actuator 30 in emergency situations, such as when the supply line 22 of the primary hydraulic circuit 20 is inoperative.

The braking actuator 30 comprises a cylinder 32 within which a piston and rod assembly 34, 36, is slidably housed so that the actuator 30 can extend and retract along a longitudinal axis A.

The cylinder 32 includes a port P for coupling the actuator 30 to the primary and secondary hydraulic circuits 20, 40. The space within the cylinder 32 between the port P and piston 34 defines an active chamber AC (also referred to as an extension chamber) that hydraulic fluid such as oil can be supplied to in order to cause the actuator 30 to extend.

Although not shown, it will be appreciated that the piston rod 36 of the braking actuator can be coupled to one or more brake stators. When the braking actuator extends, the one or more brake stators apply a braking pressure to one or more rotors fixed to a wheel. Friction between the stator(s) and rotor(s) applies a braking torque which acts to slow the rotation of the wheel (or prevent it from rotating in the case where the aircraft is stationary). Of course, in practice aircraft braking assemblies are more complicated and comprise many more elements besides. For instance, in practice a braking assembly for a single wheel may have multiple braking actuators. However, description of those elements is not necessary for the purposes of understanding the present invention.

Under normal operation, the primary hydraulic circuit 20 is operable to supply hydraulic fluid under pressure to the port P of the braking actuator 30 via a supply line 22. The supply line 22 can draw pressurised hydraulic fluid from a central hydraulic system (not shown).

The actuator 30 is single acting in that there is a single port P defining a single active chamber. A brake control valve 50 is operable to selectively connect the primary supply line 22 to the port P to permit the flow of pressurised hydraulic fluid into the active chamber. Hydraulic fluid entering the port P into the active chamber AC forces the piston 34 towards the side of the casing 32 from which the rod 36 extends. This causes the actuator 30 to change during a first phase between first and second extension states, which in turn applies a braking force to the brake rotor(s) via one or more brake stators, as discussed above. The brake control valve 50 enables control of the hydraulic pressure applied to the braking actuator from the supply line 22, such that the braking torque can be controlled.

On the far side of the piston 34 within the casing there is provided resilient biasing means, such as a mechanical spring 38, which is compressed in this example as the actuator 30 extends such that the spring 38 provides a resilient biasing force which urges the actuator 30 to contract to a contracted condition upon removal of fluid pressure from the hydraulic supply circuit. The brake control valve 50 is operable to selectively connect the port P to the return line 24 to permit the flow of pressurised hydraulic fluid out of the actuator. As the braking actuator 30 contracts, fluid is forced out of the active chamber AC through the port P and the return fluid can pass back to, for instance, a reservoir of a central hydraulic system via a return line 24.

In some circumstances, the primary hydraulic circuit 20 may not be able to provide sufficient hydraulic pressure to operate the braking actuator 30. This can occur if, for instance, there is a failure in the central hydraulic system.

Therefore, the braking system 10 also includes an emergency hydraulic fluid supply circuit 40 operable to supply pressurised hydraulic fluid to the braking actuator 30.

The emergency hydraulic circuit 40 shown in Fig. 1 comprises an emergency supply line 42 in fluid communication with the primary supply line via an emergency check valve 44. The emergency supply line 42 comprises a dedicated emergency accumulator 46 downstream of the emergency check valve 44. During normal operation, a portion of the fluid supplied by the primary hydraulic circuit 20 is directed to the emergency accumulator 46 via the emergency check valve 44, which is then stored under pressure by the emergency accumulator 46.

In an emergency braking situation, such as when the primary hydraulic circuit 20 fails or is inoperable, the emergency hydraulic circuit 40 is operable to draw pressurised hydraulic fluid from the emergency accumulator 46 and supply it to the port P of the braking actuator 30. This extends the braking actuator 30 in the same way as described above. When the braking actuator 30 contracts under the action of the biasing means 38, fluid returns via the return line 24 to, for instance, a reservoir of a central hydraulic system via a return line, as described above. An emergency brake control valve 52 selectively connects either the emergency accumulator 46 or the return line to the port P of the braking actuator to permit entry or exit of hydraulic fluid into and out of the active chamber, analogously to the operation of the brake control valve 50.

As illustrated in Fig. 1, the primary and emergency hydraulic circuits 20, 40 are connected to the port P of the braking actuator via a shuttle valve 60. The shuttle valve 60 is operable to selectively connect either the primary hydraulic circuit 20, or the emergency hydraulic circuit 40, to the braking actuator 30.

As will be appreciated, each emergency braking application (i.e. each stroke of the braking actuator) can use a full piston's volume of fluid before returning it to the reservoir of the central hydraulic system. Therefore, to enable multiple applications of the brakes in an emergency, the accumulator must be large enough store a corresponding amount of hydraulic fluid (enough to enable, for example, six full strokes). This can result in a large accumulator, which in turn increases the size and/or mass of the braking assembly. Moreover, even with a large accumulator the number of strokes of the braking actuator 30 that can be used in an emergency situation is limited.

The present invention overcomes these and other drawbacks by providing a braking system in which the emergency hydraulic fluid supply circuit comprises a piezoelectric pump for supplying the braking actuator with pressurised hydraulic fluid in an emergency situation. The present inventors have found that a piezoelectric pump can provide sufficient hydraulic pressure and flow to drive the braking actuator, while also being relatively small and lightweight.

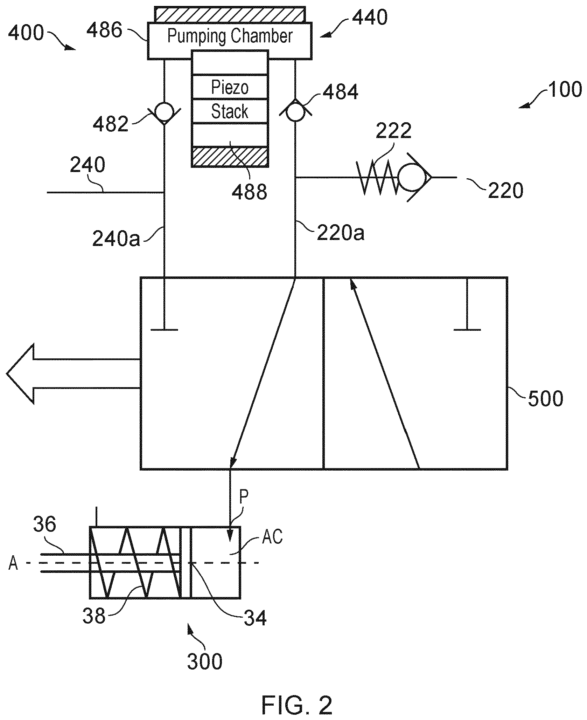

A first example of an aircraft emergency braking system in accordance with the invention is illustrated by the diagram of Fig. 2. Like the braking system 10 of Fig. 1, the braking system 100 of Fig. 2 comprises a primary hydraulic fluid supply circuit, represented by a supply line 220 and a return line 240, that drives a braking actuator 300 under normal operation and an emergency (hereon referred to as 'secondary') hydraulic fluid supply circuit 400 that drives the braking actuator 300 in emergency situations, such as when the primary hydraulic circuit fails. The secondary hydraulic circuit 400 in Fig. 2 comprises a piezoelectric pump 440 operable to draw hydraulic fluid and supply it under pressure to the port P of the actuator 300.

The primary and secondary hydraulic fluid supply circuits are coupled to the port P of the braking actuator 300 via a common brake control valve 500, such that an inlet port of the brake control valve 500 is connectable to both the supply line 220 of the primary hydraulic circuit and to the outlet of the piezoelectric pump 440, while an outlet port of the brake control valve 500 is connectable to the return line 240 of the primary hydraulic circuit and to the inlet of the piezoelectric pump 440. As explained in relation to Fig. 1 above, the brake control valve 500 is operable to selectively permit the flow of hydraulic fluid into or out of the active chamber AC of the braking actuator (illustrated in Fig. 2 by the movement of the brake control valve in the direction of the arrow). With this arrangement, a single brake control valve can serve both the primary and secondary hydraulic circuits. This can reduce the size, mass and complexity of the system compared to prior art systems, such as that of Fig. 1, which use separate brake control valves for the primary and secondary hydraulic circuits.

In Fig. 2, the primary and secondary hydraulic circuits are connected such that a portion 220a of the supply line immediately upstream of the brake control valve 500 is shared between (i.e. common to) both circuits, and a portion 240a of the return line immediately downstream of the brake control valve 500 is also shared between both circuits. The supply line 220 of the primary hydraulic circuit may be connected to the shared portion 220a of the supply line via a non-return valve 222 (also known as a one-way valve), such as a spring-loaded check valve (or other pressure-release valve), arranged to control an incoming (primary supply) flow of hydraulic fluid to the braking actuator 300 from primary hydraulic circuit.

During normal operation, when the primary hydraulic fluid supply circuit is functioning, the system of Fig. 2 operates in much the same way as described above in relation to Fig. 1. However, in an emergency situation, such as when the supply line 220 of the primary hydraulic circuit is inoperative, pressurised hydraulic fluid is provided to the braking actuator by the piezoelectric pump 440 of the secondary hydraulic circuit 400. In the system of Fig. 2, the piezoelectric pump 440 is arranged to draw hydraulic fluid entrapped within a portion of the return line between the brake control valve 500 and the inlet of the piezoelectric pump 440 (which in this example includes the above-mentioned shared portion 240a of the return line and at least a portion of the return line 240 of the primary hydraulic circuit). As will be appreciated, hydraulic fluid can be drawn from the return line after every stroke of the braking actuator 300, such that hydraulic fluid effectively flows continuously between the piezoelectric pump 440 and the actuator 300. As such, there is no limit to the number of strokes that the braking actuator 300 can perform in an emergency situation (i.e. when being supplied by the secondary hydraulic circuit 400). Furthermore, since no emergency accumulator is required, the size and mass of the system can be greatly reduced (the small size and low weight of the piezoelectric pump means that the addition of the pump can be more than offset by the removal of the accumulator).

When the secondary hydraulic circuit 400 is supplying the braking actuator (i.e. when the piezoelectric pump 440 is operating) the hydraulic pressure acts to close the non-return valve 222 that connects the primary supply line 220. In this way, the primary hydraulic circuit is partially disconnected from (i.e. the supply line 220 is not in fluid communication with) the braking actuator when the secondary hydraulic circuit 400 is operating.

In some instances, there may not be enough hydraulic fluid entrapped within the available hydraulic lines downstream of the brake control valve 500 to enable a full stroke of the braking actuator 300. Additionally, or alternatively, there may not be sufficient pressure in the return lines for the piezoelectric pump 440 to operative effectively. In such cases, it may be preferable for the braking system to comprise an emergency accumulator from which the piezoelectric pump 440 can draw up to a full piston's volume of pressurised hydraulic fluid.

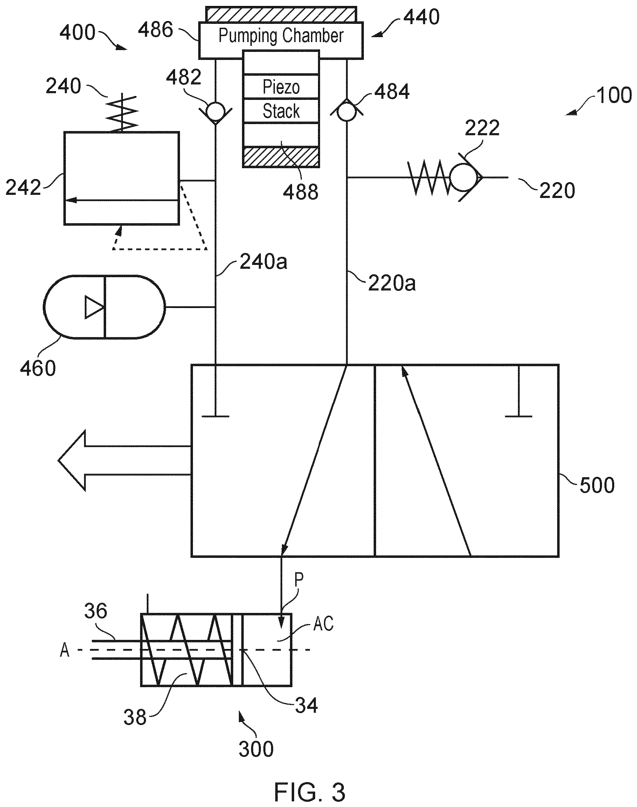

An example of such a braking system is illustrated in Fig. 3. The system 100 of Fig. 3 is substantially the same as that described above in relation to Fig. 2, except that the shared portion 240a of the return line comprises a dedicated accumulator 460 configured to store at least a portion of the pressurised hydraulic fluid returned from the braking actuator 300 as the braking actuator 300 contracts (as discussed in relation to Fig. 1 above). As opposed to prior art systems, such as that of Fig. 1 in which the emergency accumulator directly supplies the actuator, the emergency accumulator 460 according to the invention simply provides the piezoelectric pump 300 with a pressurised supply of hydraulic fluid. The piezoelectric pump 440 can then draw pressurised hydraulic fluid from the accumulator 460 in order to supply the braking actuator 300. In this case, hydraulic fluid flows continuously between the piezoelectric pump 440 and the actuator 300 via the dedicated accumulator 460, so there is no limit to the number of strokes that the braking actuator 300 can perform in an emergency situation (i.e. when being supplied by the secondary hydraulic circuit 400). Furthermore, the accumulator 460 need only store enough hydraulic fluid for one full stroke of the braking actuator 300, and additionally need only store that volume at a relatively low pressure as it is supplying only the pumping chamber of the piezoelectric pump. Therefore, the accumulator 460 can be reduced in size and mass.

Preferably, the return line 240 of the primary hydraulic circuit is connected to the shared portion 240a of the return line via a second non-return valve 242, such as a spring-loaded check valve (or other pressure-release valve), arranged to control an outgoing (primary return) flow of hydraulic fluid from the braking actuator 300 to the primary hydraulic circuit. This can boost the pressure between the accumulator 460 and the inlet of the piezoelectric pump 440. The return spring 38 and/or active chamber AC of the actuator 300 may be increased in size to accommodate the additional pressure required for hydraulic fluid to return via the primary return line 240. When the primary hydraulic circuit is supplying the braking actuator with pressurised hydraulic fluid, the hydraulic pressure acts to open the first and second non-return valves 222, 242.

The non-return valves 222, 242, can be spring-biased check valves, or any suitable non-return valves.

The piezoelectric pump 440 of embodiments of the invention can take any suitable form. For example, as illustrated in Figs. 2 and 3, the piezoelectric pump can comprise a pair of non-return valves 482, 484 spaced from one another by a housing to define a pumping chamber 486 between them. One non-return valve 482 of the pair is arranged to permit the flow of hydraulic fluid into the pumping chamber 486. The other non-return valve 484 of the pair is arranged to permit the flow of hydraulic fluid out of the pumping chamber 486. A surface of the pumping chamber 486 can, for instance, be formed from a movable diaphragm. A piezoelectric element 488, preferably comprising a piezoelectric stack as shown, is arranged to change the pumping chamber 486 (for instance by moving the diaphragm) to draw fluid into the chamber from the inlet valve 482 when the chamber volume increases and expel fluid from the chamber out of the outlet valve 484 when the chamber volume decreases. The piezoelectric element 488 can be driven by an electronic drive unit (not shown) with oscillatory high voltage/low current supply (such as up to 2000v) with frequencies typically in the range 200 to 2000 Hz. Control can be purely supply ON/supply OFF. The quantity of fluid pumped by the pump 480 can be regulated by the operational frequency and voltage of the piezo-electric element 488.

As will be appreciated, when the primary hydraulic circuit is operating the hydraulic pressure will act to close the non-return valve 484 of the piezoelectric pump, which in turn acts to close non-return valve 482, such that the hydraulic pump is disconnected (i.e. not in fluid communication with) the braking actuator. The non-return valve 222 of the primary hydraulic circuit can cooperate with the non-return valve 484 of the secondary hydraulic circuit, such that only one of the primary or secondary hydraulic circuits is connected to the braking actuator at any one time. The non-return valves 482, 484 of the piezoelectric pump can be check valves, or any suitable non-return valves.

In any of the examples described above, the primary and/or secondary hydraulic circuits can be integrally formed with the actuator 500, or can be separate units coupled to it. The primary hydraulic fluid supply circuit can comprise, or be coupled to, a centralised hydraulic system, in a manner similar to that described in relation to Fig. 1. Alternatively, the primary hydraulic circuit could be a dedicated hydraulic fluid supply circuit, such as that of an electro-hydraulic actuator. As will be appreciated, the braking actuator can be any suitable braking actuator, such as that described above in relation to Fig. 1.

The braking actuator has been described and illustrated as a single acting actuator for ease of illustration. However, it will be readily apparent to the skilled person that the invention could equally be applied for a double acting actuator.

### Parking brake implementation

In the above discussion, the invention has been described in the context of an emergency braking system. However, the braking systems described above, and illustrated in Figs. 2 and 3, could equally be applied to an aircraft parking brake. In particular, the secondary hydraulic circuit can be configured to maintain sufficient pressure on the brakes whilst the aircraft is parked, for instance by periodically turning on the piezoelectric pump.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements.

Parts of the invention may be implemented by means of hardware comprising several distinct elements. In a device claim enumerating several parts, several of these parts may be embodied by one and the same item of hardware. The mere fact that certain measures are recited in mutually different dependent claims does not indicate that a combination of these measures cannot be used to advantage.

## Claims

1. An aircraft braking system, comprising:
a braking actuator (300);
a primary hydraulic fluid supply circuit (220, 240) configured to supply pressurised hydraulic fluid to the braking actuator; and
a secondary hydraulic fluid supply circuit (400) comprising a piezoelectric pump (440) configured to supply pressurised hydraulic fluid to the braking actuator,
wherein the primary and secondary hydraulic fluid supply circuits are in fluid communication with the braking actuator via a brake control valve (500) arranged to control the movement of hydraulic fluid into and out of the braking actuator,
wherein
the brake control valve is connected to a supply line (220) of the primary hydraulic circuit and to an outlet of the piezoelectric pump via a first shared hydraulic line (220a);
**characterised in that**
the brake control valve is connected to a return line (240) of the primary hydraulic circuit and to an inlet of the piezoelectric pump via a second shared hydraulic line (240a); and
the brake control valve is arranged to selectively connect the braking actuator to the first shared hydraulic line or to the second shared hydraulic line.

2. The aircraft braking system of claim 1, further comprising an accumulator (460) arranged to store pressurised hydraulic fluid returned from the braking actuator (300), wherein the piezoelectric pump (440) is arranged to draw hydraulic fluid from the accumulator.

3. The aircraft braking system of claim 1, wherein the piezoelectric pump (440) is configured to draw exclusively from hydraulic fluid contained within one or more hydraulic lines downstream of the braking actuator (300).

4. The aircraft braking system of claim 1, wherein:
the supply line (220) of the primary hydraulic fluid supply circuit is connected to the first shared hydraulic line (220a) via a first non-return valve (222) arranged to control an incoming flow of hydraulic fluid from the primary hydraulic circuit; and/or
the return line (240) of the primary hydraulic fluid supply circuit is connected to the second shared hydraulic line (240a) via a second non-return valve (242) arranged to control an outgoing flow of hydraulic fluid returned to the primary hydraulic circuit.

5. The aircraft braking system of any preceding claim, wherein the secondary hydraulic fluid supply circuit (400) comprises:
a third non-return valve (482) arranged to control an incoming flow of hydraulic fluid into an inlet of the piezoelectric pump (440); and
a fourth non-return valve (484) arranged to control an outgoing flow of hydraulic fluid from an outlet of the piezoelectric pump.

6. The aircraft braking system of any preceding claim, wherein the secondary hydraulic fluid supply circuit (400) is an emergency hydraulic fluid supply circuit configured to supply pressurised hydraulic braking fluid to the braking actuator (300) when the primary hydraulic fluid supply circuit is inoperative.

7. The aircraft braking system of any preceding claim, wherein the braking actuator (300) is configured to apply a parking brake, and wherein the secondary hydraulic fluid supply circuit (400) is configured to supply pressurised hydraulic fluid to the braking actuator to maintain a braking force.

8. The aircraft braking system of any preceding claim, wherein the primary hydraulic fluid supply circuit comprises, or is coupled to, a central hydraulic system.

9. The aircraft braking system of any preceding claim, wherein the primary and secondary hydraulic fluid supply circuits are configured to supply pressurised hydraulic fluid to two or more braking actuators.

10. An aircraft landing gear assembly comprising the aircraft braking system of any preceding claim.

11. An aircraft comprising the aircraft landing gear assembly of claim 10.

## Patentansprüche

1. Flugzeugbremssystem, das Folgendes umfasst:
ein Bremsenstellglied (300);
einen primären Hydraulikflüssigkeitsversorgungskreislauf (220, 240), der so konfiguriert ist, dass er das Bremsenstellglied mit unter Druck stehender Hydraulikflüssigkeit versorgt; und
einen sekundären Hydraulikflüssigkeitsversorgungskreislauf (400), der eine piezoelektrische Pumpe (440) umfasst, die so konfiguriert ist, dass sie das Bremsenstellglied mit unter Druck stehender Hydraulikflüssigkeit versorgt,
wobei der primäre und der sekundäre Hydraulikflüssigkeitsversorgungskreislauf über ein Bremssteuerventil (500), das so angeordnet ist, dass es die Bewegung der Hydraulikflüssigkeit in das und aus dem Bremsenstellglied steuert, in Fluidverbindung mit dem Bremsenstellglied stehen,
wobei das Bremssteuerventil über eine erste gemeinsame Hydraulikleitung (220a) mit einer Versorgungsleitung (220) des primären Hydraulikkreislaufs und mit einem Ausgang der piezoelektrischen Pumpe verbunden ist;
**dadurch gekennzeichnet, dass**
das Bremssteuerventil über eine zweite gemeinsame Hydraulikleitung (240a) mit einer Rücklaufleitung (240) des primären Hydraulikkreislaufs und mit einem Einlass der piezoelektrischen Pumpe verbunden ist; und
das Bremsensteuerventil so angeordnet ist, dass es das Bremsenstellglied wahlweise mit der ersten gemeinsamen Hydraulikleitung oder mit der zweiten gemeinsamen Hydraulikleitung verbindet.

2. Flugzeugbremssystem nach Anspruch 1, ferner umfassend einen Druckspeicher (460), der so angeordnet ist, dass er vom Bremsenstellglied (300) zurückgeführte, unter Druck stehende Hydraulikflüssigkeit speichert, wobei die piezoelektrische Pumpe (440) so angeordnet ist, dass sie Hydraulikflüssigkeit aus dem Druckspeicher ansaugt.

3. Flugzeugbremssystem nach Anspruch 1, wobei die piezoelektrische Pumpe (440) so konfiguriert ist, dass sie ausschließlich Hydraulikflüssigkeit ansaugt, die in einer oder mehreren Hydraulikleitungen stromabwärts des Bremsenstellglieds (300) enthalten ist.

4. Flugzeugbremssystem nach Anspruch 1, wobei:
die Versorgungsleitung (220) des primären Hydraulikkreislaufs mit der ersten gemeinsamen Hydraulikleitung (220a) über ein erstes Rückschlagventil (222) verbunden ist, das so angeordnet ist, dass es einen eingehenden Strom von Hydraulikflüssigkeit aus dem primären Hydraulikkreislauf steuert; und/oder
die Rücklaufleitung (240) des primären Hydraulikkreislaufs mit der zweiten gemeinsamen Hydraulikleitung (240a) über ein zweites Rückschlagventil (242) verbunden ist, das so angeordnet ist, dass es einen ausgehenden Strom der zum primären Hydraulikkreislauf zurückgeführten Hydraulikflüssigkeit steuert.

5. Flugzeugbremssystem nach einem der vorhergehenden Ansprüche, wobei der sekundäre Hydraulikflüssigkeitsversorgungskreislauf (400) Folgendes umfasst:
ein drittes Rückschlagventil (482), das so angeordnet ist, dass es einen in einen Einlass der piezoelektrischen Pumpe (440) eingehenden Strom von Hydraulikflüssigkeit steuert; und
ein viertes Rückschlagventil (484), das so angeordnet ist, dass es einen aus einem Auslass der piezoelektrischen Pumpe ausgehenden Strom von Hydraulikflüssigkeit steuert.

6. Flugzeugbremssystem nach einem der vorhergehenden Ansprüche, wobei der sekundäre Hydraulikflüssigkeitsversorgungskreislauf (400) als Notfall-Hydraulikflüssigkeitsversorgungskreislauf fungiert, der so konfiguriert ist, dass er dem Bremsenstellglied (300) unter Druck stehende Hydraulikbremsflüssigkeit zuführt, wenn der primäre Hydraulikflüssigkeitsversorgungskreislauf außer Betrieb ist.

7. Flugzeugbremssystem nach einem der vorhergehenden Ansprüche, wobei das Bremsenstellglied (300) so konfiguriert ist, dass es eine Parkbremse anlegt, und wobei der sekundäre Hydraulikflüssigkeitsversorgungskreislauf (400) so konfiguriert ist, dass er dem Bremsenstellglied unter Druck stehende Hydraulikflüssigkeit zuführt, um eine Bremskraft aufrechtzuerhalten.

8. Flugzeugbremssystem nach einem der vorhergehenden Ansprüche, wobei der primäre Hydraulikkreislauf ein zentrales Hydrauliksystem umfasst oder mit diesem gekoppelt ist.

9. Flugzeugbremssystem nach einem der vorhergehenden Ansprüche, wobei die primären und sekundären Hydraulikkreisläufe so konfiguriert sind, dass sie zwei oder mehr Bremsenstellglieder mit unter Druck stehender Hydraulikflüssigkeit versorgen.

10. Flugzeugfahrwerk, das das Flugzeugbremssystem nach einem der vorhergehenden Ansprüche umfasst.

11. Flugzeug, das das Flugzeugfahrwerk nach Anspruch 10 umfasst.

## Revendications

1. Système de freinage d'aéronef, comprenant :
un actionneur de freinage (300) ;
un circuit d'alimentation en fluide hydraulique primaire (220, 240) configuré pour alimenter l'actionneur de freinage en fluide hydraulique sous pression ; et
un circuit d'alimentation en fluide hydraulique secondaire (400) comprenant une pompe piézoélectrique (440) configuré pour alimenter l'actionneur de freinage en fluide hydraulique sous pression,
dans lequel les circuits d'alimentation en fluide hydraulique primaire et secondaire sont en communication fluidique avec l'actionneur de freinage par l'intermédiaire d'une vanne de commande de frein (500) agencée pour commander le mouvement de fluide hydraulique dans et hors de l'actionneur de freinage,
dans lequel la vanne de commande de frein est connectée à une ligne d'alimentation (220) du circuit hydraulique primaire et à une sortie de la pompe piézoélectrique par l'intermédiaire d'une première ligne hydraulique partagée (220a) ;
**caractérisé en ce que**
la vanne de commande de frein est connectée à une ligne de retour (240) du circuit hydraulique primaire et à une entrée de la pompe piézoélectrique par l'intermédiaire d'une seconde ligne hydraulique partagée (240a) ; et
la vanne de commande de frein est agencée pour connecter sélectivement l'actionneur de freinage à la première ligne hydraulique partagée ou à la seconde ligne hydraulique partagée.

2. Système de freinage d'aéronef selon la revendication 1, comprenant en outre un accumulateur (460) agencé pour stocker du fluide hydraulique sous pression renvoyé depuis l'actionneur de freinage (300), dans lequel la pompe piézoélectrique (440) est agencée pour aspirer du fluide hydraulique depuis l'accumulateur.

3. Système de freinage d'aéronef selon la revendication 1, dans lequel la pompe piézoélectrique (440) est configurée pour aspirer exclusivement du fluide hydraulique contenu à l'intérieur d'une ou de plusieurs lignes hydrauliques en aval de l'actionneur de freinage (300).

4. Système de freinage d'aéronef selon la revendication 1, dans lequel :
la ligne d'alimentation (220) du circuit d'alimentation en fluide hydraulique primaire est connectée à la première ligne hydraulique partagée (220a) par l'intermédiaire d'un premier clapet anti-retour (222) agencé pour commander un flux entrant de fluide hydraulique depuis le circuit hydraulique primaire ; et/ou
la ligne de retour (240) du circuit d'alimentation en fluide hydraulique primaire est connectée à la seconde ligne hydraulique partagée (240a) par l'intermédiaire d'un deuxième clapet anti-retour (242) agencé pour commander un flux sortant de fluide hydraulique renvoyé vers le circuit hydraulique primaire.

5. Système de freinage d'aéronef selon une quelconque revendication précédente, dans lequel le circuit d'alimentation en fluide hydraulique secondaire (400) comprend :
un troisième clapet anti-retour (482) agencé pour commander un flux entrant de fluide hydraulique dans une entrée de la pompe piézoélectrique (440) ; et
un quatrième clapet anti-retour (484) agencé pour commander un flux sortant de fluide hydraulique depuis une sortie de la pompe piézoélectrique.

6. Système de freinage d'aéronef selon une quelconque revendication précédente, dans lequel le circuit d'alimentation en fluide hydraulique secondaire (400) est un circuit d'alimentation en fluide hydraulique d'urgence configuré pour alimenter l'actionneur de freinage (300) en fluide de freinage hydraulique sous pression lorsque le circuit d'alimentation en fluide hydraulique primaire est inopérant.

7. Système de freinage d'aéronef selon une quelconque revendication précédente, dans lequel l'actionneur de freinage (300) est configuré pour appliquer un frein de stationnement, et dans lequel le circuit d'alimentation en fluide hydraulique secondaire (400) est configuré pour alimenter l'actionneur de freinage en fluide hydraulique sous pression pour maintenir une force de freinage.

8. Système de freinage d'aéronef selon une quelconque revendication précédente, dans lequel le circuit d'alimentation en fluide hydraulique primaire comprend, ou est couplé à, un système hydraulique central.

9. Système de freinage d'aéronef selon une quelconque revendication précédente, dans lequel les circuits d'alimentation en fluide hydraulique primaire et secondaire sont configurés pour alimenter en fluide hydraulique sous pression deux ou plus actionneurs de freinage.

10. Ensemble de train d'atterrissage d'aéronef comprenant le système de freinage d'aéronef selon une quelconque revendication précédente.

11. Aéronef comprenant l'ensemble de train d'atterrissage d'aéronef selon la revendication 10.
